# EUROPÄISCHE PATENTSCHRIFT

(11) **EP 3 416 746 B1**
(45) Veröffentlichungstag und Bekanntmachung des Hinweises auf die Patenterteilung: **23.12.2020**
(21) Anmeldenummer: 17705870.8
(22) Anmeldetag: 16.02.2017
(51) Int. Cl.: A47J 31/60, A47J 31/46, B05B 7/00, A23P 30/40

(54) **KONISCHES FILTERPLÄTTCHEN**
SMALL CONICAL FILTER PLATE
PLAQUE FILTRANTE CONIQUE

(30) Priorität: 17.02.2016 DE 102016102795
(43) Veröffentlichungstag der Anmeldung: 26.12.2018
(73) Patentinhaber: Übermorgen Innovations GmbH, 52070 Aachen (DE)
(72) Erfinder: ZWICK, Boris, 76297 Stutensee (DE)
(74) Vertreter: von Bülow & Tamada
(86) Internationale Anmeldenummer: PCT/EP2017/053549
(87) Internationale Veröffentlichungsnummer: WO 2017/140809

(56) Entgegenhaltungen:
- EP-A1- 2 268 173
- DE-B4-102010 023 781
- US-B1- 6 231 909

## Beschreibung

Die vorliegende Erfindung betrifft ein Filterelement gemäß dem Oberbegriff des Anspruchs 1 und einen Milchaufschäumer mit dem Filterelement.

Ein Filterelement gemäß dem Oberbegriff des Anspruchs 1 ist aus der

DE 10 2010 023 781 B2 bekannt. Nachteilig an diesem Filterelement ist, dass der poröse Grundkörper normalerweise mit einer rauen Seite und einer glatten Seite hergestellt wird. Während Filterrückstände von der glatten Seite eher einfach zu entfernen sind, verfangen sie sich an der rauen Seite häufig und sind von dort nur unzureichend zu entfernen. Dadurch muss das Filterelement dann schneller ausgetauscht werden.

Aufgabe der Erfindung ist, die Reinigbarkeit des Filterelements zu steigern und so seine Lebensdauer zu erhöhen.

Die Aufgabe wird durch die Merkmale des kennzeichnenden Teils des Anspruchs 1 gelöst. Bevorzugte Weiterbildungen sind Gegenstand der abhängigen Ansprüche.

Dem Filterelement gemäß dem Anspruch 1 liegt die Uberlegung zugrunde, die Seiten durch unterschiedliche Formgebung so auszubilden, dass das Filterelement nur mit der glatten Seite entgegen der Milchflussrichtung in den Milchkanal einführbar ist. Auf diese Weise wird dem Anwender die Möglichkeit genommen, die raue Seite entgegen der Milchflussrichtung einzusetzen, so dass dieser nicht erst die korrekte Seitenausrichtung lernen und beispielsweise in einem Handbuch nachschlagen braucht. Gemäß Anspruch 1 wird der Grundkörper dabei wenigstens abschnittsweise in der Form eines Kegelstumpfes ausgebildet.

Das Filterelement nach Anspruch 3 kann in einem schlauchförmigen Milchkanal wie ein Stopfen verwendet werden, so dass auf eventuelle Dichtungen verzichtet werden kann.

Das Filterelement nach Anspruch 4 ist mechanisch besonders stabil.

Eines der angegebenen Filterelemente kann in dem Milchaufschäumer des Anspruchs 5 eingesetzt verwendet werden.

In dem Milchaufschäumer gemäß Anspruch 6 kann das Filterelement besonders einfach eingelegt und entfernt werden.

Die oben beschriebenen Eigenschaften, Merkmale und Vorteile dieser Erfindung sowie die Art und Weise, wie diese erreicht werden, werden verständlicher im Zusammenhang mit der folgenden Beschreibung der Ausführungsbeispiele, die im Zusammenhang mit der Zeichnung näher erläutert werden. Es zeigen:
- Fig. 1: eine perspektivische Ansicht eines Milchaufschäumers mit einem Milchauslasskopf,
- Fig. 2: eine perspektivische Ansicht einer unteren Gehäuseschale des Milchauslasskopfes der Fig. 1,
- Fig. 3: eine perspektivische Ansicht einer oberen Gehäuseschale des Milchauslasskopfes der Fig. 1,
- Fig. 4: eine perspektivische Ansicht der oberen Gehäuseschale der Fig. 3 mit einem darin eingesetzten Filterelement,
- Fig. 5: eine Draufsicht auf ein abgenutztes Filterelement,
- Fig. 6: eine perspektivische Prinzipdarstellung des Filterelementes aus Fig. 4 in einer ersten Lage, und
- Fig. 7: eine perspektivische Prinzipdarstellung des Filterelementes aus Fig. 6 in einer zweiten Lage.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

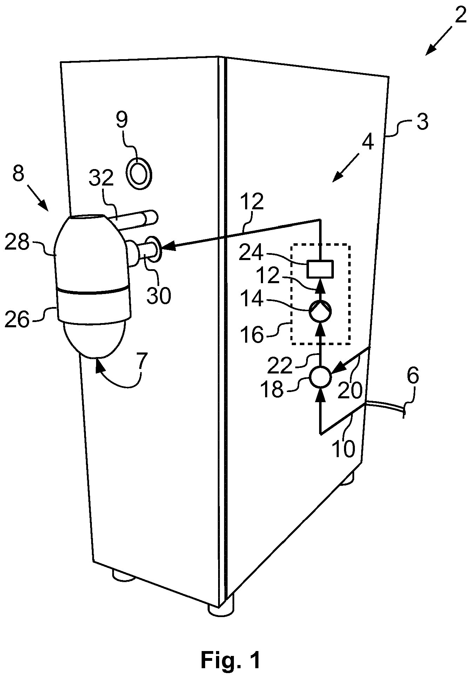

Es wird auf Fig. 1 Bezug genommen, die in einer perspektivischen Darstellung einen Milchaufschäumer 2 zeigt. Die einzelnen Elemente im Inneren des Milchaufschäumers 2 sind nur strukturell angedeutet.

Der Milchaufschäumer 2 umfasst einen sich durch ein Gehäuse 3 erstreckenden Milchkanal 4, der sich ausgehend von einem Milchansaugschlauch 6 bis zu einer Austrittsöffnung 7 eines Milchauslasskopfs 8 erstreckt. Im Betrieb des Milchaufschäumers 2 wird auf Druck eines Bedienknopfes 9 am Gehäuse 3 des Milchaufschäumers 2 über den Milchansaugschlauch 6 aus einem nicht weiter dargestellten Milchbehälter Milch 10 in den Milchkanal 4 angesaugt und zu einem Milchschaum 12 verarbeitet und an der Austrittsöffnung 7 am Milchauslasskopf 8 ausgegeben.

Zur Erzeugung des Milchschaumes 12 saugt eine Pumpe 14 in einem Schäumungsabschnitt 16 die Milch 10 an. Über eine vor der Pumpe 14 angeordnete Venturi-Düse 18 wird die Milch 10 dabei mit Luft 20 angereichert, so dass in die Pumpe 14 mit Luft 20 durchsetzte Milch 22 eintritt und dort vermischt wird. Auf diese Weise entsteht grundsätzlich der Milchschaum 12. In einem sich anschließenden Temperierelement 24 wird dann der Milchschaum 12 nachbearbeitet und beispielsweise erwärmt, was zu einer Ausdehnung der sich im Milchschaum 12 befindlichen Luftbläschen und einer Stabilisierung des Milchschaumes 12 führt.

Weitere Details zum Milchaufschäumer 2 können der DE 10 2010 023 781 B2 entnommen werden.

Der Milchauslasskopf 8 weist eine untere Gehäuseschale 26 und eine obere Gehäuseschale 28 auf. In die obere Gehäuseschale 28 führt ein Milchkanal 30 für den Milchschaum 12. Ferner ist die obere Gehäuseschale 28 über eine Haltestrebe 32 am Gehäuse 3 fixiert. Über die in Fig. 1 nicht zu sehende, aber mit einem Bezugszeichen angedeutete Austrittsöffnung 7 kann der Milchschaum 12 in eine Tasse oder dergleichen entlassen werden.

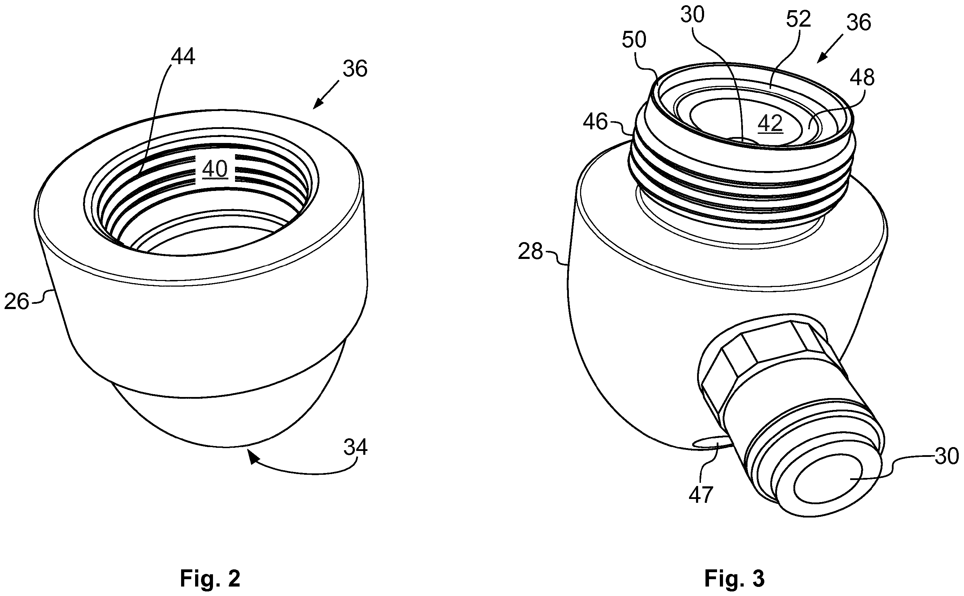

Nachstehend wird der durch die beiden Gehäuseschalen 26, 28 eingehauste Innenraum 36 des Milchauslasskopfs 8 anhand der Fig. 2 bis 4 näher erläutert.

In den Innenraum 36 wird über den Milchkanal 30 der Milchschaum 12 geführt und mittels einem darin aufgenommenen Filterelement 38 gefiltert. Der Innenraum 36 ist durch einen ersten Halbraum 40 in der unteren Gehäuseschale 26 und einen zweiten Halbraum 42 in der oberen Gehäuseschale 28 gebildet. An einer mantelseitigen Wand des ersten Halbraumes 40 ist ein Innengewinde 44 ausgebildet, in das ein Außengewinde 46 eingeschraubt werden kann, das an einer Mantelfläche eines Hohlzylinders an der oberen Gehäuseschale 28 ausgebildet ist. Ferner ist an der oberen Gehäuseschale 28 noch eine Aufnahmeöffnung 47 für die Haltestrebe 32 ausgebildet.

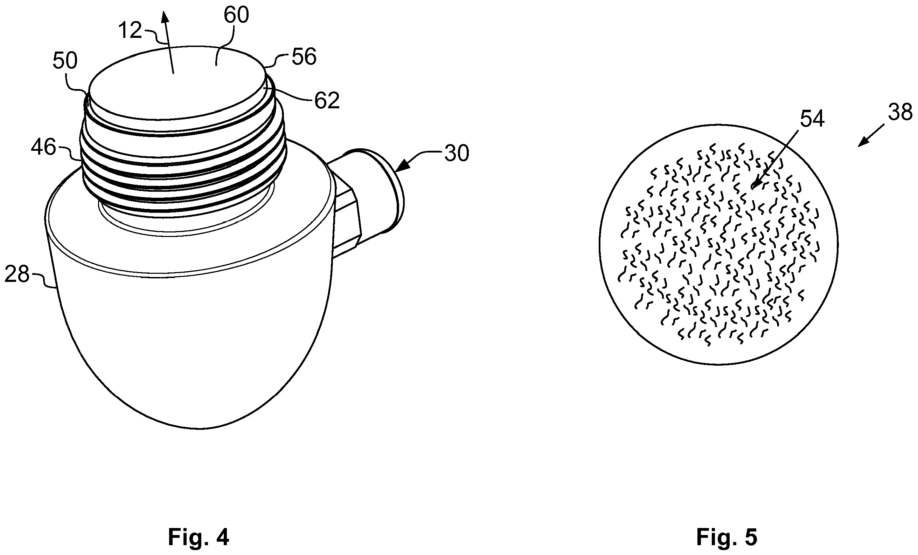

Der Hohlzylinder weist eine Schulter 48 auf, an derem radialen Ende sich eine Zylinderwand 50 axial fortsetzt. Auf diese Schulter 48 kann ein Dichtungsring 52 aufgelegt sein. Radial innerhalb der Schulter 48 tritt der Milchkanal 30 in den zweiten Halbraum 40 des Innenraums 36 ein. Wird auf die Schulter 48, wie in Fig. 4 gezeigt, das Filterelement 38 aufgelegt, dann wird der Innenraum 36 zwischen dem ersten Halbraum 40 und dem zweiten Halbraum 42 getrennt. Der in den zweiten Halbraum 42 eintretende Milchschaum 12 passiert das Filterelement 38, das wiederum Schmutzpartikel 54 aus dem Milchschaum 12 herausfiltert, die beispielhaft in Fig. 5 gezeigt sind.

Dieses Filterelement 38 soll nachstehend anhand der Fig. 4, 6 und 7 näher beschrieben werden.

Das Filterelement 38 umfassend einen plattenförmigen porösen Grundkörper 56 mit einer ersten Seite 58, an der der Milchschaum 12 aus dem zweiten Halbraum 42 in den porösen Grundkörper 56 eintreten kann, mit einer zweiten Seite 60, an der der Milchschaum 12 aus dem porösen Grundkörper 56 in den ersten Halbraum 40 austreten kann und mit einer die erste Seite 58 und zweite Seite 60 verbindenden Mantelseite 62.

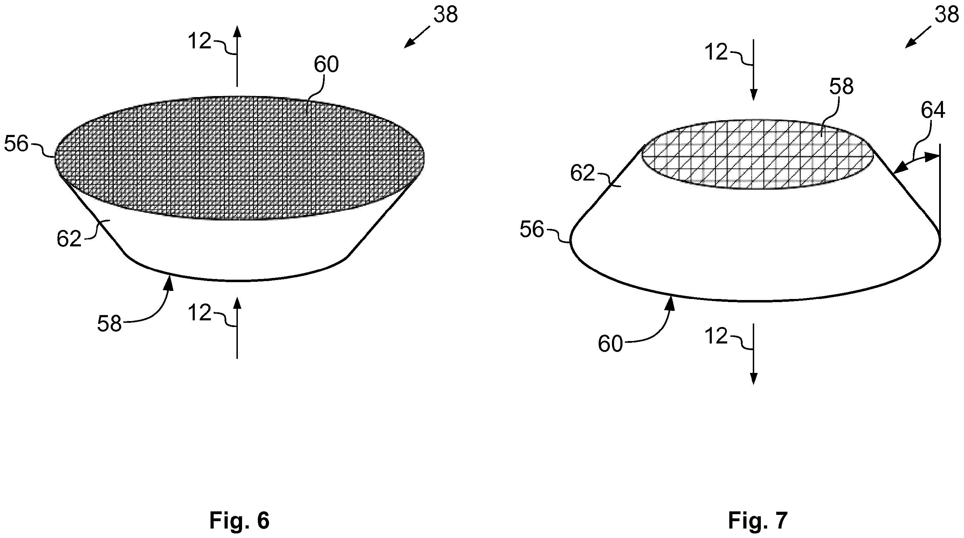

In dem Filterelement ist eine Oberflächenrauheit der ersten Seite 58 kleiner als eine Oberflächenrauheit der zweiten Seite 60, d.h. dass die erste Seite 58 glatter ist als die zweite Seite 60. Die kleinere Oberflächenrauheit der ersten Seite 58 ist in Fig. 6 und 7 durch eine gegenüber der zweiten Seite 60 weniger dichte Schraffur angedeutet. Aufgrund der kleineren Oberflächenrauheit lassen sich die Verunreinigungen 54 aus Fig. 5 von der ersten Seite 58 einfacher entfernen als von der zweiten Seite 60, weil sich die Verunreinigungen auf der ersten Seite 58 weniger stark verfangen als auf der zweiten Seite 60.

Es wäre daher wünschenswert, das Filterelement 38 mit der glatteren ersten Seite 58 voran in den zweiten Halbraum 42 einzusetzen. Um dies zu ermöglichen, unterscheidet sich die erste Seite 58 von der zweiten Seite 60 derart, dass nur die erste Seite in den zweiten Halbraum 42 eingeführt werden kann. Dies ist in der vorliegenden Ausführung dadurch realisiert, dass die Größe der beiden Seiten 58, 60 unterschiedlich ist. Wird das Filterelement 38 mit der ersten Seite 58 zuerst in den zweiten Halbraum 42 eingeführt, so dringt der poröse Grundkörper 56 teilweise in diesen ein. Wird das Filterelement 38 jedoch versucht, mit der zweiten Seite 60 zuerst in den zweiten Halbraum 42 eingeführt zu werden, dann schlägt die zweite Seite 60 an die Zylinderwand 50 an und der poröse Grundkörper 56 lässt sich nicht in den zweiten Halbraum 42 einführen. Der Anwender merkt daher schon allein daran, dass er versucht, das Filterelement 38 mit der falschen Seite 60 zuerst in den zweiten Halbraum 42 einzuführen, weil das Filterelement 38 nicht mit einem festen Halt darin eingelegt werden kann.

Der poröse Grundkörper 56 ist in der vorliegenden Ausführung in der Form eines rotationssymmetrischen Kegelstumpfes ausgeführt. Diese Rotationssymmetrie hat zusätzlich den Vorteil, dass der Kegelstumpf als eine Art Stopfen an der Zylinderwand 50 angelegt wird und die beiden Halbräume 40, 42 auch ohne die Dichtung 52 grundsätzlich wirkungsvoll voneinander trennen kann. Auf die Dichtung 52 könnte daher grundsätzlich vollständig verzichtet werden. Hierdurch sind weniger verschleißanfällige Teile in dem Milchaufschäumer 2 vorhanden, die zu Ausfällen führen könnten.

Um den porösen Grundkörper dennoch so stabil wie möglich zu halten, sollte ein Steigungswinkel 64 zwischen einer Flächennormalen der beiden Seiten 58, 60 und der Mantelseite 62 nicht zu hoch gewählt werden. In der Praxis haben sich maximal 15° als tauglich erwiesen. Besonders wirksam ist die Erfindung mit einem Steigungswinkel 64 zwischen 1° und 2°.

Es ist verständlich, dass die Ausgestaltung der Seiten 58, 60 davon abhängt, wo die Zylinderwand 50 ausgebildet wird. Wenn die Zylinderwand 50 an der unteren Gehäuseschale 26 ausgebildet ist, so muss die abgeschnittene konische Form des Filterelementes 38 in Fig. 6 und 7 genau umgedreht zu diesen Figuren ausgeführt werden. Wo die glatte Seite 58 angeordnet wird, d.h. auf dem Kegelstumpf oben oder unten, hängt damit vom Aufbau des Milchaufschäumer 2 ab, in dem das Filterelement 38 verwendet wird.

## Patentansprüche

1. Filterelement (38) zum Filtern von Milch (10, 12) in einem Milchaufschäumer (2), umfassend einen plattenförmigen porösen Grundkörper (56) mit einer ersten Seite (58), an der die Milch (10, 12) in den porösen Grundkörper (56) eintreten kann, einer zweiten Seite (60), an der die Milch (10, 12) aus dem porösen Grundkörper (56) austreten kann und einer die erste und zweite Seite verbindenden Mantelseite (62), **dadurch gekennzeichnet, dass** eine Oberflächenrauheit der ersten Seite (58) kleiner ist als eine Oberflächenrauheit der zweiten Seite (60) und dass sich die erste Seite (58) und die zweite Seite (60) voneinander unterscheiden, wobei der Grundkörper (56) wenigstens abschnittsweise die Form eines Kegelstumpfes besitzt.

2. Filterelement (38) nach Anspruch 1, wobei sich die erste Seite (58) und die zweite Seite (60) in ihrer Form voneinander unterscheiden

3. Filterelement (38) nach Anspruch 1 oder 2, wobei der Kegelstumpf rotationssymmetrisch ist.

4. Filterelement (38) nach Anspruch 3, wobei ein Winkel (64) zwischen der Rotationsachse des Kegelstumpfes und der Mantelseite (62) kleiner als 15° ist, insbesondere zwischen 1° und 2° liegt.

5. Milchaufschäumer (2) mit einem Milchkanal (4) zum Ansaugen von Milch (10) aus einem Milchbehälter, einem Luftanreicherungselement (18) zum Durchsetzen der Milch (10) im Milchkanal (4) mit Luft (20), einem Schäumungsabschnitt (16) im Milchkanal (4) zum Umwandeln der mit Luft (20) angereicherten Milch (22) im Milchkanal (4) in einen Milchschaum (12) und einem Milchauslasskopf (8) im Milchkanal (4) zum Ausgeben des Milchschaums (12), wobei der Milchkanal (4) ein Filterelement (38) nach einem der vorstehenden Ansprüche umfasst.

6. Milchaufschäumer (2) nach Anspruch 5, wobei der Milchauslasskopf (8) einen Filterhalter mit zwei gegeneinander verschließbaren Gehäusehälften (26, 28) umfasst, zwischen denen das Filterelement (38) einsetzbar angeordnet ist.

## Claims

1. Filter element (38) for filtering milk (10, 12) in a milk frother (2), comprising a plate-shaped porous base body (56) having a first side (58) at which the milk (10, 12) can enter the porous base body (56), a second side (60) at which the milk (10, 12) can exit the porous base body (56), and a jacket side (62) connecting the first and second sides, **characterized in that** a surface roughness of the first side (58) is smaller than a surface roughness of the second side (60), and **in that** the first side (58) and the second side (60) differ from one another, the base body (56) having the shape of a truncated cone at least in sections.

2. Filter element (38) according to claim 1, wherein the first side (58) and the second side (60) differ from one another in their shape

3. Filter element (38) according to claim 1 or 2, wherein the truncated cone is rotationally symmetrical.

4. Filter element (38) according to claim 3, wherein an angle (64) between the axis of rotation of the truncated cone and the lateral surface (62) is less than 15°, in particular lies between 1° and 2°.

5. Milk frother (2) with a milk channel (4) for sucking milk (10) from a milk container, an air enrichment element (18) for passing the milk (10) in the milk channel (4) with air (20), a foaming section (16) in the milk channel (4) for converting the milk (22) in the milk channel (4) enriched with air (20) into a milk foam (12), and a milk discharge head (8) in the milk channel (4) for discharging the milk foam (12), wherein the milk channel (4) comprises a filter element (38) according to any of the above claims.

6. Milk frother (2) according to claim 5, wherein the milk outlet head (8) comprises a filter holder with two housing halves (26, 28) which can be closed against each other and between which the filter element (38) is insertably arranged.

## Revendications

1. Elément filtrant (38) pour filtrer le lait (10, 12) dans un mousseur à lait (2), comprenant un corps de base poreux en forme de plaque (56) ayant un premier côté (58) sur lequel le lait (10, 12) peut entrer dans le corps de base poreux (56), un second côté (60) sur lequel le lait (10, 12) peut sortir du corps de base poreux (56), et un côté enveloppe (62) reliant les premier et second côtés, **caractérisé en ce qu'**une rugosité de surface du premier côté (58) est inférieure à une rugosité de surface du deuxième côté (60), et **en ce que** le premier côté (58) et le deuxième côté (60) diffèrent l'un de l'autre, le corps de base (56) ayant la forme d'un cône tronqué au moins par sections.

2. Elément filtrant (38) selon la revendication 1, dans lequel le premier côté (58) et le deuxième côté (60) diffèrent l'un de l'autre par leur forme

3. Elément filtrant (38) selon la revendication 1 ou 2, dans lequel le cône tronqué est symétrique en rotation.

4. Elément filtrant (38) selon la revendication 3, dans lequel un angle (64) entre l'axe de rotation du tronc de cône et la surface latérale (62) est inférieur à 15°, en particulier se situe entre 1° et 2°.

5. Mousseur à lait (2) ayant un canal à lait (4) pour aspirer le lait (10) d'un récipient à lait, un élément d'enrichissement de l'air (18) pour faire passer l'air (20) à travers le lait (10) dans le canal à lait (4), une section de moussage (16) dans le canal à lait (4) pour convertir l'air (20) enrichi en lait (22) dans le canal à lait (4) en une mousse de lait (12), et une tête de décharge de lait (8) dans le canal à lait (4) pour décharger la mousse de lait (12), dans lequel le canal à lait (4) comprend un élément filtrant (38) selon l'une des revendications ci-dessus.

6. Mousseur à lait (2) selon la revendication 5, dans lequel la tête de sortie du lait (8) comprend un support de filtre avec deux moitiés de boîtier (26, 28) qui peuvent être fermées l'une par rapport à l'autre et entre lesquelles l'élément filtrant (38) est disposé de manière à pouvoir être inséré.
